# EUROPÄISCHE PATENTSCHRIFT

(11) **EP 2 010 455 B1**
(45) Veröffentlichungstag und Bekanntmachung des Hinweises auf die Patenterteilung: **11.05.2016**
(21) Anmeldenummer: 07727629.3
(22) Anmeldetag: 02.04.2007
(51) Int. Cl.: C01B 17/16, B01J 19/02, C22C 38/40, C22C 19/05

(54) **REAKTIONSBEHÄLTER FÜR DIE HERSTELLUNG VON SCHWEFELWASSERSTOFF**
REACTION VESSEL FOR THE PRODUCTION OF HYDROGEN SULPHIDE
RÉCIPIENT RÉACTIONNEL POUR LA PRODUCTION D'ACIDE SULFHYDRIQUE

(30) Priorität: 27.04.2006 DE 102006019590
(43) Veröffentlichungstag der Anmeldung: 07.01.2009
(73) Patentinhaber: Evonik Degussa GmbH, 45128 Essen (DE)
(72) Erfinder: REDLINGSHÖFER, Hubert, 91481 Münchsteinach (DE); SCHÜTZE, Karl-Günther, 63477 Maintal (DE); WECKBECKER, Christoph, 63584 Gründau-Lieblos (DE); HUTHMACHER, Klaus, 63571 Gelnhausen (DE)
(86) Internationale Anmeldenummer: PCT/EP2007/053157
(87) Internationale Veröffentlichungsnummer: WO 2007/124996

(56) Entgegenhaltungen:
- EP-A1- 0 022 349
- EP-B1- 0 851 037
- DE-C- 558 432
- GB-A- 366 762
- GB-A- 1 147 574
- GB-A- 1 193 040
- US-A- 2 965 455
- US-B1- 6 623 869
- C. ROSSADO, M. SCHÜTZE: MATERIALS AND CORROSION, Bd. 54, Nr. 11, 2003, Seiten 831-853, XP002441147 Weinheim

## Beschreibung

Die vorliegende Erfindung betrifft einen Reaktionsbehälter in dem Schwefelwasserstoff aus Schwefel und Wasserstoff hergestellt wird, wobei der Reaktionsbehälter teilweise oder vollständig aus einem gegen diese Verbindungen bzw. Elemente beständigen Werkstoff besteht, der auch bei hohen Temperaturen seine Beständigkeit behält.

Insbesondere Schwefelwasserstoff ist ein industriell wichtiges Zwischenprodukt zum Beispiel für die Synthese von Methylmercaptan, Dimethylsulfid, Dimethyldisulfid, Sulfonsäuren, Dimethylsulfoxid, Dimethylsulfon sowie für zahlreiche Sulfidierungsreaktionen. Es wird heute überwiegend aus der Erdöl- und Erdgasaufbereitung sowie durch Reaktion von Schwefel und Wasserstoff gewonnen.

Die Synthese von Schwefelwasserstoff aus den Elementen Wasserstoff und Schwefel erfolgt üblicherweise durch Einleiten von Wasserstoff in flüssigen Schwefel und einem nachgeschalteten Reaktionsraum in der Gasphase. Dabei sind sowohl katalysierte als auch unkatalysierte Verfahren bekannt. Die Synthese des Schwefelwasserstoffs erfolgt gewöhnlich in der Gasphase bei Temperaturen zwischen 300 und 600°C und bei Drücken zwischen 1 und 30 bar. Die industrielle Produktion von Schwefelwasserstoff aus den Elementen verläuft nach Ullmann's Encyclopedia of Industrial Chemistry, Wiley-VCH, 2002 bei Temperaturen von 450 °C und einem Druck von 7 bar.

In der GB 1193040 ist die unkatalysierte Synthese von Schwefelwasserstoff bei relativ hohen Temperaturen von 400 bis 600 °C und Drücken von 4 bis 15 bar beschrieben. Es wird angegeben, dass die erforderliche Temperatur vom Druck bestimmt wird, bei dem die Synthese ablaufen soll. Bei einem Druck von 9 bar sind demnach etwa 500 °C erforderlich.

Ein wesentlicher Punkt bei der Herstellung von Schwefelwasserstoff aus Schwefel und Wasserstoff ist vor allem die Temperaturführung. Hohe Temperaturen sind notwendig, um einen Gleichgewichtszustand zu erreichen, bei dem sich ein Molverhältnis Wasserstoff:Schwefel in der Gasphase von etwa 1:1 einstellt. Erst dies ermöglicht die Synthese von reinem Schwefelwasserstoff. Mit zunehmendem Druck ist die Temperatur entsprechend der Dampfdruckkurve von Schwefel stark zu erhöhen, um das angestrebte Molverhältnis von 1:1 in der Gasphase zu erreichen. Dabei sind schon geringe Unterschiede im Druck von z. B. 1 bar und weniger von großer Bedeutung.

CSSR 190792 beschreibt eine Verfahrensvariante zur Herstellung von Schwefelwasserstoff, wobei hohe Reaktionstemperaturen durch eine vergleichsweise aufwendige Reihenschaltung von mehreren Reaktoren vermieden werden. Hohe Temperaturen werden dort speziell aufgrund von Korrosionsproblemen vermieden. In CSSR 190793 wird von starker Korrosion der Anlage ab Temperaturen von 400 °C berichtet.

Auch in US 4094961 wird bei der Synthese von Schwefelwasserstoff von schwerer Korrosion bei Temperaturen von 440 bis 540 °C berichtet. Deshalb wird die Synthese dort nur bei Temperaturen unterhalb von 440 °C durchgeführt.

DE 558 432 C offenbart einen Reaktionsbehälter für die Verwendung bei der Herstellung von Schwefelwasserstoff aus Wasserstoff und Schwefel, bei dem sämtliche Teile, die mit heißem Schwefel oder H₂S in Berührung kommen, aus Aluminium oder dessen Legierungen oder aus alumetiertem Eisen gefertigt sind. Die Reaktion kann bei einem beliebigen Druck und bei einer Temperatur zwischen 300 und 350°C durchgeführt werden. Das Wasserstoff-Schwefel-Gemisch wird über einen Katalysator geleitet, der eines oder mehrere aktive Elemente, ausgewählt aus der Gruppe Mo, W, Fe, Ni, Co, Zn oder V, enthält, die auf Trägersubstanzen wie Kieselsäuregel oder Kaolin aufgebracht sein können.

US-A-2 965 455 beschreibt einen Reaktionsbehälter für die Herstellung von Schwefelwasserstoff aus Wasserstoff und Schwefel bei einer Temperatur von ungefähr 320°C und bevorzugt bei Normaldruck. Die Umsetzung erfolgt mit Hilfe eines Katalysators, der Metalle der 5., 6. und 8. Gruppe, wie Mo, Co, Ni, Fe oder V auf porösen Trägermaterialien beispielsweise Al₂O₃, enthalten kann. Die Temperatur des Katalysators wird mit Hilfe von Wärmetauschern auf das Schwefelbad abgegeben. Diese Wärmetauscher bestehen aus Aluminiumlegierungen oder aluminiumbeschichtetem Eisen, die bei diesen Temperaturen nicht von Schwefel oder Wasserstoff angegriffen werden.

Der Artikel B. Glaser, M. Schütze, F. Vollhardt, "Auswertung von Daten zum H2S-Angriff auf Stähle bei verschiedenen Temperaturen und Konzentrationen", Werkstoffe und Korrosion 42, 374-376, 1991 beschreibt, dass für Anlagen, in denen ein korrosiver Angriff durch H₂S bei erhöhten Temperaturen vorliegt, dieser einen wesentlichen Grund für die Behinderung einer Weiterentwicklung solcher Anlagen darstellt. Insbesondere bleibt bisher der Übergang zu höheren Temperaturen und damit zu einer wirtschaftlichen Verbesserung der entsprechenden Verfahren verschlossen, da in diesem Fall bereits nach kurzen Zeiten massive Korrosionsschäden und damit ein Ausfall der Anlagen eintreten. Als Haupteinflussfaktoren auf die Korrosion werden die Temperatur und die H2S-Konzentration genannt. Als deutlich begrenzte Gegenmaßnahme wird die Erhöhung des Cr-Gehalts im Stahl auf 16 % genannt, wobei eine Erhöhung über 16 % hinaus nur eine weniger ausgeprägte Wirkung hat. So werden Abtragsraten der Stähle von mehr als 0,5 oder sogar mehr als 1,0 mm/a bei H₂S-Konzentrationen von 10 % Vol-% bei 450-550 °C berichtet. Obwohl sehr hochlegierte Stähle insgesamt ein etwas besseres Verhalten zeigen wird doch deutlich, dass die Eignung des Werkstoffs Stahl für diesen Einsatzzweck begrenzt sind.

Aus der EP-B-0851037 sind Cr-Ni-Legierungen bekannt, die eine erhöhte Korrosionsbeständigkeit gegen Schwefelwasserstoff besitzen und zur Herstellung von Pipelines zum Transport von Erdöl und Erdgas eingesetzt werden.

Aufgabe der Erfindung ist es, einen Reaktionsbehälter für die Verwendung bei der Synthese von Schwefelwasserstoff bereitzustellen, der auch bei hohen Reaktionstemperaturen auf Dauer ohne hohen Abtrag des Werkstoffs sicher betrieben werden kann.

Gegenstand der Erfindung ist ein Reaktionsbehälter gemäß Anspruch 1, der teilweise oder vollständig aus einem Werkstoff besteht, der auch bei hohen Temperaturen geringe Abtragsraten aufweist.

Während die am häufigsten in der chemischen Industrie eingesetzten Stähle und Edelstähle (wie z.B. 1.4571) vorwiegend die Hauptbestandteile Fe, Cr und Ni sowie Zusätze von Mo, Ti, P, S, Mn, Si und C in unterschiedlichster Zusammensetzung enthalten, gibt es weiterhin zahlreiche Sonderwerkstoffe mit unterschiedlichen weiteren Elementen und Verbindungen. Da trotz der Vielfalt ein besonders geeigneter Werkstoff nicht gefunden wurde, traten bei der Synthese von Schwefelwasserstoff bei hohen Temperaturen die oben beschriebenen Korrosionsprobleme bei hohen Reaktionstemperaturen auf, was die Weiterentwicklung des Gesamtverfahrens einschränkte.

Es wurden jetzt Werkstoffe gefunden, die bei den Bedingungen der Synthese von Schwefelwasserstoff bei hohen Temperaturen beständig sind. Sie enthalten neben den Bestandteilen der am häufigsten verwendeten Werkstoffe bevorzugt Zusätze wie Co, Al, Cu und/oder Y. Diese können teilweise nur in relativ geringen Mengen von einigen Prozent und weniger enthalten sein und liefern bereits eine deutliche Verbesserung des Korrosionsverhaltens. Sowohl die Ausführung eines stabilen und sicheren Reaktionsbehälters als auch die Weiterentwicklung des Verfahrens bei höheren Reaktionstemperaturen wird mit diesen Werkstoffen gewährleistet.

Die Prozentsätze werden immer auf 100% gerechnet.

Im Rahmen von Untersuchungen wurden beispielsweise folgende Werkstoffe auf ihre Eignung geprüft, die nach DIN und der entsprechenden US-Norm bezeichnet sind:

| DIN-Nr. | US-Norm-Nr. |
|---|---|
| 1.4571 | AlSl 316Ti |
| 1.4841 | AlSl 314 |
| 2.4851 | UNS N06601 (alloy 601) |
| 2.4633 | UNS N06025 |
| 3.3535 | AA 5754 |

Bevorzugt eingesetzt werden beispielsweise die Werkstoffe 2.4633, 2.4851 oder 3.3535.

Wesentlich ist die Gegenwart von Aluminium in dem Werkstoff.

Gegenstand der Erfindung ist ebenso die Verwendung der erfindungsgemäßen Reaktionsbehälter bei der Herstellung von Schwefelwasserstoff aus Wasserstoff und Schwefel, insbesondere bei hohen Temperaturen.

Die Temperaturen bei der Synthese von Schwefelwasserstoff liegen im Bereich von 300 bis 600 °C, insbesondere 400 bis 550 °C.

Bei der Synthese von Schwefelwasserstoff ist neben der Anwesenheit des Zielprodukts auch die Gegenwart von Schwefel, Wasserstoff, Verunreinigungen oder Nebenprodukten von Bedeutung für die Beständigkeit des Reaktionsbehälters. Es ist sogar möglich, dass bei der Synthese von Schwefelwasserstoff alleine die Hilfsstoffe, Einsatzstoffe, deren Verunreinigungen oder Nebenprodukte sowie die Zusammensetzung des Reaktionsgemischs und die Reaktionsbedingungen die Materialauswahl für den Reaktionsbehälter bestimmen.

Die Beständigkeit wird in Form der Abtragsrate gemessen sowie durch optische bzw. mikroskopische Betrachtung festgestellt.

Als geringe Abtragsrate gilt bei der Schwefelwasserstoffsynthese bei hohen Temperaturen ein gleichmäßiger Flächenabtrag von weniger als 0,5 mm/a, bevorzugt weniger als 0,3 mm/a. Sollte der Abtrag zwischen 0,1 und 0,3 mm/a betragen, so kann dieser für einen Langzeitbetrieb des Reaktionsbehälters üblicherweise durch einen Korrosionszuschlag ausgeglichen werden. Abträge > 0,5 mm/a würden zu massiven Verstopfungen von Apparaten und Rohrleitungen sowie zu deutlich erhöhtem Materialaufwand, hohen Instandhaltungskosten und größeren Sicherheitsrisiken führen.

Es kann von Vorteil sein, den Reaktionsbehälter nur teilweise aus dem sehr beständigen Werkstoff anzufertigen, wenn beispielsweise gewisse Halbzeuge nicht in den gewünschten Abmessungen verfügbar oder dann sehr teuer sind. Dann werden konventionelle Werkstoffe wie normaler oder hochlegierter Edelstahl mit entsprechendem Korrosionszuschlag aufgrund der besseren Verfügbarkeit oder des deutlich geringeren Preises für diesen begrenzten Teil des Reaktionsbehälters eingesetzt während der restliche Teil des Reaktionsbehälters aus dem beständigen Werkstoff besteht. Da das Korrosionsverhalten stark von der Temperatur abhängt und die Temperatur innerhalb des Reaktionsbehälters unterschiedlich sein kann, können auch nur die Teile des Reaktionsbehälters, die während des Reaktionsablaufs hohen Temperaturen ausgesetzt sind, aus dem beständigen Werkstoff mit den gewünschten geringen Abtragsraten bestehen, während der restliche Teil aus anderen Werkstoffen mit ggf. höheren Abtragsraten gefertigt ist. Auch Anschlussleitungen, Armaturen oder Mess- und Regelorgane können den erfindungsgemäßen Werkstoff enthalten.

Gegebenenfalls ist es zweckmäßig, den Reaktionsbehälter oder die eingesetzten Werkstoffteile vor dem ersten Gebrauch chemisch oder thermisch vorzubehandeln, z.B. durch Beizen oder durch eine Voroxidation bei hohen Temperaturen. Dies kann die Beständigkeit des Reaktionsbehälters steigern. Dabei werden dem Fachmann bekannte Verfahren verwendet.

Für die Fertigung und Montage des Reaktionsbehälters werden dem Fachmann bekannte Verfahren wie beispielsweise Schweißen verwendet. In diesem Zusammenhang können ebenfalls geeignete Zusatzwerkstoffe zur Oberflächenbehandlung oder zum Verbinden von Bauteilen wie beispielsweise Schweißzusatzwerkstoffe eingesetzt werden.

Bezüglich der Form bestehen für den Reaktionsbehälter keine besonderen Einschränkungen. Als Beispiel sei genannt, dass Teile des Reaktionsbehälters aus Rohren mit einem Innendurchmesser von 30 bis 130 mm, einer Wanddicke von 1 bis 5 mm und einer Länge von 1000 bis 4000 mm verwendet werden können. Von solchen Rohren werden mehrere Exemplare in einem Druckbehälter eingesetzt und beispielsweise Temperaturen zwischen 350 und 600 °C und Drücken von 0,2 bis 30 bar ausgesetzt. Der Reaktionsbehälter oder Teile des Reaktionsbehälters für die Synthese von Schwefelwasserstoff können mit Katalysator gefüllt werden. Ein anderer Teil des Reaktionsbehälters kann vorwiegend mit flüssigem Schwefel und weitere Teile vorwiegend mit Gasen gefüllt sein. Der verwendete Werkstoff kann zusätzlich durch seine Bestandteile die Umsetzung zu Schwefelwasserstoff beschleunigen.

Das Verfahren zur Herstellung von Schwefelwasserstoff ist ebenso Bestandteil der Erfindung, wobei das Verfahren in den erfindungsgemäßen Behältern abläuft.

Der Fachmann ist in der Auswahl der zu kombinierenden Verfahrensschritte zur Herstellung von Schwefelwasserstoff frei, wobei auch mehrere Reaktionsbehälter und verschiedene Apparate zur Abtrennung von Nebenprodukten oder unverbrauchten Einsatzstoffen verwendet werden können.

Beispielsweise wird zur Herstellung von Schwefelwasserstoff Wasserstoff bei einem Druck von 8 bis 20 bar in den Reaktionsbehälter in flüssigen Schwefel eingeleitet und in einen nachgeschalteten Reaktionsraum des Reaktionsbehälters umgesetzt. Die gesamte Anordnung wird bevorzugt bei der gleichen Temperatur betrieben.

Weiterhin läuft die Umsetzung zu Schwefelwasserstoff bevorzugt in Gegenwart eines heterogenen Katalysators ab. Dabei handelt es sich bevorzugt um einen schwefelbeständigen Hydrierkatalysator, der bevorzugt aus einem Träger wie beispielsweise Siliziumoxid, Aluminiumoxid, Zirkoniumoxid oder Titanoxid besteht sowie eines oder mehrere der aktiven Elemente Molybdän, Nickel, Wolfram, Vanadium, Kobalt, Schwefel, Selen, Phosphor, Arsen, Antimon und Wismut enthält. Der Katalysator kann sowohl in der Flüssigphase als auch in der Gasphase eingesetzt werden. Je nach Reaktionsbedingungen, insbesondere bei hohen Temperaturen kann zumindest ein Teil des Schwefelwasserstoffs im Reaktionsbehälter auch ohne die Einwirkung eines Katalysators gebildet werden.

In einer weiteren Ausführungsform der Erfindung werden mehrere, insbesondere zwei oder drei Reaktionsbehälter aus dem erfindungsgemäßen Werkstoff in Serie geschaltet. Dabei wird der im ersten Reaktionsbehälter nur teilweise umgesetzte Wasserstoff zusammen mit dem gebildeten Schwefelwasserstoff in einem weiteren Reaktionsbehälter zur weiteren Umsetzung zu Schwefelwasserstoff bevorzugt in flüssigem Schwefel verteilt und direkt im Bereich des flüssigen Schwefels und/oder in einem nachgeschalteten Gasraum weiter zu Schwefelwasserstoff umgesetzt. Bei der Verwendung von zwei in Reihe geschalteten Reaktionsbehältern beträgt der Umsatz von Wasserstoff nach dem ersten Reaktor im allgemeinen zwischen 40 und 85 %. Werden drei Reaktoren eingesetzt, so beträgt der Umsatz von Wasserstoff nach dem ersten Reaktor 20 bis 50 % und nach dem zweiten Reaktor im allgemeinen 50 bis 85 %. Sollten mehrere Reaktionsbehälter (Reaktoren) eingesetzt werden, so können bevorzugt alle oder auch nur einer aus dem erfindungsgemäßen Werkstoff bestehen. Sollten mehrere Reaktionsbehälter in Reihe geschaltet sein, so können auch deren Verbindungs- oder Anschlussleitungen sowie Armaturen und Mess- und Regelorgane aus dem erfindungsgemäßen Werkstoff bestehen.

Anstelle von reinem Wasserstoff kann auch verunreinigter Wasserstoff durch den flüssigen Schwefel geleitet werden. Die Verunreinigungen können beispielsweise Kohlendioxid, Schwefelwasserstoff, Wasser, Methanol, Methan, Ethan, Propan, oder andere leichtflüchtige Kohlenwasserstoffe sein. Bevorzugt wird Wasserstoff mit einer Reinheit größer als 65 Vol.-% eingesetzt, wovon bevorzugt mehr als 98 % des eingesetzten Wasserstoffs zu Schwefelwasserstoff umgesetzt werden. Die Verunreinigungen im Wasserstoff oder deren Reaktionsprodukte werden bevorzugt vor der Synthese von Methylmercaptan nicht abgetrennt, sondern im Eduktgemisch belassen. Die Wahl des erfindungsgemäßen Werkstoffs des Reaktionsbehälters wird durch die Reinheit des eingesetzten Wasserstoffs bevorzugt nicht beeinflusst. Gleiches gilt für den Einsatz des verwendeten Schwefels. Auch dieser kann unterschiedliche Verunreinigungen enthalten.

Insgesamt kann durch die Erfindung einerseits ein wirtschaftlicherer Betrieb von Produktionsanlagen für Schwefelwasserstoff ermöglicht werden, da der Reaktionsbehälter auch bei langem Betrieb von mehreren Jahren oder Jahrzehnten nur wenig gewartet, repariert und nicht teilweise oder vollständig ersetzt werden muss. Andererseits wird durch die Wahl eines beständigen Werkstoffes die Anlagensicherheit erhöht, weil die Gefahr des Materialversagens, die Wahrscheinlichkeit von Unfällen durch den Austritt von Gefahrstoffen minimiert wird. Dies ist von besonderer Bedeutung bei sehr giftigen Stoffen wie Schwefelwasserstoff.

Zudem ermöglicht das Auffinden von bei hohen Temperaturen stabilen Werkstoffen die Weiterentwicklung des Gesamtverfahrens zur Herstellung von Schwefelwasserstoff, da Grenzen die bisher durch die Materialbeständigkeit vorgegeben wurden, verschwinden bzw. zu höheren Reaktionstemperaturen verschoben werden.

In einer Ausführungsform des Reaktionsbehälters zur Herstellung von Schwefelwasserstoff wird auf die Oberfläche des Werkstoffs 1.4571 ein Uberzug aus vorwiegend Aluminium- bzw. Aluminiumoxid aufgebracht. Der Aluminium- bzw. Aluminiumoxidgehalt des Überzugs beträgt dabei bevorzugt mehr als 40 %, besonders bevorzugt mehr als 70 %. Neben Aluminium können auch weitere Elemente enthalten sein. Die Art und Weise das Aufbringens dieses Überzugs kann durch verschiedene, dem Fachmann bekannte Verfahren wie beispielsweise durch Flammspritzen, chemische oder physikalische Gasphasenabscheidung (CVD, PVD), Schmelztauchen oder elektrolytische Abscheidung erfolgen. Die Dicke dieser Beschichtung unterliegt keinen besonderen Beschränkungen, doch um die Haltbarkeit zu erhöhen, soll sie vorzugsweise mehr als 100 µm, besser mehr als 150 µm betragen, gewöhnlich liegt sie unter 1 mm.

In einer weiteren Ausführungsform der Erfindung wird der Gehalt an Aluminium an der Oberfläche eines Stahls angereichert. Dies erfolgt nicht durch eine Schichtbildung, sondern durch Festkörperdiffusion des Aluminiums in die oberflächennahen Bereiche bei hohen Temperaturen. Dabei gehen die verwendeten Aluminiumpulver mit dem Werkstoff eine Verbindung ein. Dies hat den Vorteil das keine unterschiedlichen thermischen Ausdehnungskoeffizienten wie bei einer Beschichtung zum Abplatzen oder zur Rissbildung führen können. Der dann mit Aluminium an der Oberfläche angereicherte Werkstoff hat dann in den oberflächennahen Zonen (0 bis 0,5 mm) einen Aluminiumgehalt von mindestens 1 %, bevorzugt mehr als 3 %, besonders bevorzugt mehr als 5 %. Hinsichtlich des mit Aluminium an der Oberfläche anzureichernden Werkstoffes gibt es lediglich die Beschränkungen, dass das Aluminium durch Festkörperdiffusion in die oberflächennahen Schichten eindringen kann.

### Vergleichsbeispiel 1

Eine Werkstoffprobe des Edelstahls mit der Werkstoffnummer 1.4571 und EN Werkstoffkurzname X6CrNiMoTi17-12-2 der chemischen Zusammensetzung < 0,08 % C, < 1,0 % Si, < 2,0 % Mn, < 0,045 % P, < 0,015 S, 16,5-18,5 % Cr, 2,0-2,5 % Mo, < 0,7 % Ti Rest Fe sowie 10,5-13,5 % Ni mit einer äußeren Oberfläche von 15,94 cm² und einer Masse von 15,54 g wurde in einem Autoklav untersucht, der mit. 200 ml Schwefel gefüllt und mit einem Drittel Wasserstoff und zwei Drittel Schwefelwasserstoff auf einen Druck von 12 bar aufgedrückt war. Der Autoklav wurde bei einer Temperatur von 450 °C 450 h bei konstanten Bedingungen betrieben. Nach dem Öffnen des Autoklaven wurde die Werkstoffprobe entnommen und untersucht. Allein optisch war zu erkennen, dass der Werkstoff an der Oberfläche teilweise deutlich abgeplatzt war. Nach Entfernung der an der Oberfläche nur noch lose anhaftenden Teile betrug die Masse der Werkstoffprobe 14,78 g, was einem Massenverlust von 0,76 g und einer Abtragung von 476 g/m² oder einer Abtragsrate von 1,15 mm/a entspricht.

### Vergleichsbeispiel 2

Analog zu Vergleichsbeispiel 1 wurde ein weiterer Edelstahl mit der Werkstoffnummer 1.4841, dem EN Werkstoffkurznamen X15CrNiSi25-20, und der chemischen Zusammensetzung < 0,2 % C, 1,5-2,5 % Si, < 2,0 % Mn, < 0,045 % P, < 0,03 S, 24,0-26,0 % Cr, Rest Fe sowie 19,0-22,0 % Ni im Autoklav untersucht. Allein optisch war zu erkennen, dass der Werkstoff an der Oberfläche teilweise deutlich abgeplatzt war. Nach Entfernung der an der Oberfläche nur noch lose anhaftenden Teile betrug der Massenverlust einer Abtragung von 296 g/m² oder einer Abtragsrate von 0,72 mm/a.

### Beispiel 1

Analog zu Vergleichsbeispiel 1 wurde ein weiterer Werkstoff, Alloy 601 mit der Werkstoffnummer 2.4851 und dem EN Werkstoffkurznamen NiCr23Fe mit einer chemischen Zusammensetzung < 0,1 % C, < 0,5 % Si, < 1,0 % Mn, < 0,02 % P, < 0,015 S, 21,0-25,0 % Cr, < 0,5 % Cu, < 18,0 % Fe, 1,0-1,7 % Al, < 1,0 % Co, < 0,5 % Ti, 0,05-0,12 % Y sowie 58,0-63,0 % Ni im Autoklav untersucht. Optisch waren nur ein geringer abgeplatzter Werkstoffanteil zu erkennen. Nach Entfernung der an der Oberfläche nur noch lose anhaftenden Teile entsprach der Massenverlust einer Abtragung von 158 g/m² oder einer Abtragsrate von 0,38 mm/a.

### Beispiel 2

Analog zu Vergleichsbeispiel-1 wurde ein weiterer Werkstoff, Alloy 602 CA mit der Werkstoffnummer 2.4633 und dem EN Werkstoff Kurznamen NiCr25FeAlY mit einer chemischen Zusammensetzung 0,15-0,25 % C, < 0,5 % Si, < 0,50 % Mn, < 0,02 % P, < 0,01 S, 24,0-26,0 % Cr, < 0,1 % Cu, 8,0-11,0 % Fe, 1,8-2,4 % Al, < 0,3 % Co, 0,1-0,2 % Ti, 0,05-0,12 % Y sowie 41,0-66,0 % Ni im Autoklav untersucht. Optisch waren keine abgeplatzten Schichten, Risse oder Löcher zu erkennen. Nach Entfernung der an der Oberfläche nur noch lose anhaftenden Teile betrug der Massenverlust einer Abtragung von 82 g/m² oder einer Abtragsrate von 0,19 mm/a.

### Beispiel 3

Analog zu Vergleichsbeispiel 1 wurde ein weiterer Werkstoff mit der Werkstoffnummer 3.3535 und dem EN Werkstoff Kurznamen AW-Al Mg3 mit einer chemischen Zusammensetzung < 0,4 % Si, < 0,50 % Mn, < 0,3 % Cr, < 0,1 % Cu, < 0m4 % Fe, 96,0-97,5 % Al, < 0,15 % Ti, < 0,2 % Zn, < 0,3 % Cr sowie 2,6-3,6 % Mg im Autoklav untersucht. Optisch war keine abgeplatzten Schichten, Risse oder Löcher zu erkennen. Der Massenverlust betrug einer Abtragung von 0,8 g/m² oder einer Abtragsrate von 0,003 mm/a.

### Beispiel 4

Analog zu Vergleichsbeispiel 1 wurde ein weiterer Werkstoff 1.4571 mit einer etwa 100 µm dicken Oberflächenbeschichtung aus Al₂O₃ im Autoklav untersucht. Optisch waren keine abgeplatzten Werkstoffanteile, Risse oder Löcher zu erkennen. Der Massenverlust war dabei sehr gering, was einer vernachlässigbaren Abtragung von 0,5 g/m² oder einer Abtragsrate von 0,002 mm/a entspricht.

Es ist festzustellen, dass bei den in Beispielen 1-4 eingesetzten Werkstoffen ein deutlich geringerer Massenverlust bzw. Abtrag in Gegenwart von Schwefel, Wasserstoff und Schwefelwasserstoff eintritt. Somit gelten diese aluminiumhaltigen Werkstoffe und deren chemische Zusammensetzung als deutlich besser geeignet zur Konstruktion eines Reaktionsbehälters für die Synthese von Schwefelwasserstoff.

## Patentansprüche

1. Reaktionsbehälter zur Herstellung von Schwefelwasserstoff durch Reaktion zwischen Schwefel und Wasserstoff, **dadurch gekennzeichnet, dass** der Reaktionsbehälter und gegebenenfalls Anschlussleitungen sowie Armaturen und Mess- und Regelorgane teilweise oder vollständig aus einem gegen das Reaktionsgemisch beständigen Werkstoff bestehen, der Aluminium enthält, **dadurch, gekennzeichnet, dass** dieser Werkstoff aus der folgenden Gruppe an Werkstoffen ausgewählt ist: i) ein Werkstoff der Werkstoffnummer 2.4851 mit einer chemischen Zusammensetzung < 0,1 % C, < 0,5 % Si, < 1,0 % Mn, < 0,02 % P, < 0,015 % S, 21,0-25,0 % Cr, < 0,5 % Cu, < 18, 0 % Fe, 1,0-1,7 % Al, < 1,0 % Co, < 0,5 % Ti, 0,05-0,12 % Y sowie 58,0-63,0 % Ni, ii) ein Werkstoff der Werkstoffnummer 2.4633 mit einer chemischen Zusammensetzung mit einer chemischen Zusammensetzung 0,15-0,25 % C, < 0,5 % Si, < 0,50 % Mn, < 0,02 % P, < 0,01 % S, 24,0-26,0 % Cr, < 0,1 % Cu, 8,0-11,0 % Fe, 1,8-2,4 % Al, < 0,3 % Co, 0,1-0,2 % Ti, 0,05-0,12 % Y sowie 41,0-66,0 % Ni, iii) ein Werkstoff mit der Werkstoffnummer 3.3535 mit einer chemischen Zusammensetzung mit einer chemischen Zusammensetzung < 0,4 % Si, < 0,50 % Mn, < 0,3 % Cr, < 0,1 % Cu, < 0, 4 % Fe, 96, 0-97, 5 % Al, < 0,15 % Ti, < 0,2 % Zn sowie 2,6-3,6 % Mg oder iv) ein Werkstoff mit der Werkstoffstoffnummer 1.4571 mit einer chemischen Zusammensetzung mit einer chemischen Zusammensetzung < 0,08 % C, < 1,0 % Si, < 2,0 % Mn, < 0,045 % P, < 0,015 % S, 16,5-18,5 % Cr, 2,0-2,5 % Mo, < 0,7 % Ti, Rest Fe sowie 10,5-13,5 % Ni, wobei dieser Werkstoff an der Kontaktfläche mit Aluminiumoxid oder Aluminium beschichtet ist.

2. Reaktionsbehälter gemäß Anspruch 1, **dadurch gekennzeichnet, dass** die Schicht mittels Flammspritzen aufgebracht wurde.

3. Reaktionsbehälter gemäß Anspruch 1 oder 2, **dadurch gekennzeichnet, dass** die Dicke der Schicht 0,05 bis 1,0 mm beträgt.

4. Reaktionsbehälter gemäß den Ansprüchen 1 bis 3, **dadurch gekennzeichnet, dass** der Werkstoff in der oberflächennahen Zone mit Aluminiumoxid oder Aluminium im Vergleich zum Ausgangswerkstoff angereichert ist.

5. Reaktionsbehälter gemäß Anspruch 4, **dadurch gekennzeichnet, dass** die Anreicherung mittels Festkörperdiffusion bei hohen Temperaturen erfolgt.

6. Reaktionsbehälter gemäß Anspruch 5, **dadurch gekennzeichnet, dass** die Dicke der mit Aluminium angereicherten Zone 0,05 bis 1,0 mm beträgt.

7. Reaktionsbehälter gemäß den Ansprüchen 1 bis 6, **dadurch gekennzeichnet, dass** der Werkstoff durch Beizen oder Voroxidation vorbehandelt wird.

8. Verwendung des Reaktionsbehälters gemäß den Ansprüchen 1 bis 7 zur Herstellung von Schwefelwasserstoff, **dadurch gekennzeichnet, dass** der Druck in dem Reaktionsbehälter >0 bar bis 50 bar beträgt.

9. Verwendung gemäß Anspruch 8, **dadurch gekennzeichnet, dass** der Druck in dem Reaktionsbehälter >9 bar bis 20 bar beträgt.

10. Verwendung gemäß Anspruch 8 oder 9, **dadurch gekennzeichnet, dass** die Synthese von Schwefelwasserstoff bei einer Temperatur zwischen 300°C und 600°C erfolgt.

11. Verwendung gemäß den Ansprüchen 8 bis 10, **dadurch gekennzeichnet, dass** die Synthese von Schwefelwasserstoff in Gegenwart eines heterogenen Katalysators erfolgt.

12. Verwendung gemäß Anspruch 11, **dadurch gekennzeichnet, dass** die Synthese von Schwefelwasserstoff in Gegenwart eines heterogenen Trägerkatalysators erfolgt, der eines oder mehrere der aktiven Elemente, ausgewählt aus der Gruppe Molybdän, Nickel, Wolfram, Vanadium, Kobalt, Schwefel, Selen, Phosphor, Arsen, Antimon, Wismut, Silizium, Aluminium, Titan und Zirkonium enthält.

13. Verwendung gemäß den Ansprüchen 8 bis 12, **dadurch gekennzeichnet, dass** der Schwefelwasserstoff in zwei oder mehreren in Reihe geschalteten oder verbundenen Reaktionsbehältern hergestellt wird.

14. Verwendung gemäß den Ansprüchen 8 bis 13, **dadurch gekennzeichnet, dass** der zur Herstellung von Schwefelwasserstoff eingesetzte Wasserstoff weitere Substanzen enthält.

15. Verwendung gemäß den Ansprüchen 8 bis 14, **dadurch gekennzeichnet, dass** der zur Herstellung von Schwefelwasserstoff eingesetzte Schwefel weitere Substanzen enthält.

16. Verwendung gemäß den Ansprüchen 8 bis 15, **dadurch gekennzeichnet, dass** der zur Herstellung von Schwefelwasserstoff eingesetzte Wasserstoff weitere Substanzen und das aus der Schwefelwasserstoffsynthese austretende Reaktionsgemisch neben Schwefelwasserstoff Nebenprodukte oder Ausgangsstoffe enthält.

## Claims

1. Reaction vessel for the preparation of hydrogen sulphide by reaction between sulphur and hydrogen, **characterized in that** the reaction vessel and, if appropriate, connection lines and fittings and measurement and control units consist partly or fully of a material which is resistant towards the reaction mixture and comprises aluminium, **characterized in that** said material is selected from the following group of materials: i) a material of materials number 2.4851 with a chemical composition of < 0.1% C, < 0.5% Si, < 1.0% Mn, < 0.02% P, < 0.015% S, 21.0-25.0% Cr, < 0.5% Cu, < 18.0% Fe, 1.0-1.7% Al, < 1.0% Co, < 0.5% Ti, 0.05-0.12% Y, and 58.0-63.0% Ni, ii) a material of materials number 2.4633 with a chemical composition with a chemical composition of 0.15-0.25% C, < 0.5% Si, < 0.50% Mn, < 0.02% P, < 0.01% S, 24.0-26.0% Cr, < 0.1% Cu, 8.0-11.0% Fe, 1.8-2.4% Al, < 0.3% Co, 0.1-0.2% Ti, 0.05-0.12% Y, and 41.0-66.0% Ni, iii) a material with materials number 3.3535 with a chemical composition with a chemical composition of < 0.4% Si, < 0.50% Mn, < 0.3% Cr, < 0.1% Cu, < 0.4% Fe, 96.0-97.5% Al, < 0.15% Ti, < 0.2% Zn, and 2.6-3.6% Mg, or iv) a material with materials number 1.4571 with a chemical composition with a chemical composition of < 0.08% C, < 1.0% Si, < 2.0% Mn, < 0.045% P, < 0.015% S, 16.5-18.5% Cr, 2.0-2.5% Mo, < 0.7% Ti, remainder Fe, and 10.5-13.5% Ni, where this material is coated with aluminium oxide or aluminium on the contact surface.

2. Reaction vessel according to Claim 1, **characterized in that** the layer has been applied by means of flame-spraying.

3. Reaction vessel according to Claim 1 or 2, **characterized in that** the thickness of the layer is 0.05 to 1.0 mm.

4. Reaction vessel according to Claims 1 to 3, **characterized in that** the material in the zone close to the surface is enriched with aluminium oxide or aluminium in comparison to the starting material.

5. Reaction vessel according to Claim 4, **characterized in that** the enrichment is effected by means of solid-state diffusion at high temperatures.

6. Reaction vessel according to Claim 5, **characterized in that** the thickness of the zone enriched with aluminium is 0.05 to 1.0 mm.

7. Reaction vessel according to Claims 1 to 6, **characterized in that** the material is pretreated by pickling or pre-oxidation.

8. Use of the reaction vessel according to Claims 1 to 7 for preparing hydrogen sulphide, **characterized in that** the pressure in the reaction vessel is > 0 bar to 50 bar.

9. Use according to Claim 8, **characterized in that** the pressure in the reaction vessel is > 9 bar to 20 bar.

10. Use according to Claim 8 or 9, **characterized in that** the synthesis of hydrogen sulphide is effected at a temperature between 300°C and 600°C.

11. Use according to Claims 8 to 10, **characterized in that** the synthesis of hydrogen sulphide is effected in the presence of a heterogeneous catalyst.

12. Use according to Claim 11, **characterized in that** the synthesis of hydrogen sulphide is effected in the presence of a heterogeneous supported catalyst which comprises one or more of the active elements selected from the group of molybdenum, nickel, tungsten, vanadium, cobalt, sulphur, selenium, phosphorus, arsenic, antimony, bismuth, silicon, aluminium, titanium and zirconium.

13. Use according to Claims 8 to 12, **characterized in that** the hydrogen sulphide is prepared in two or more reaction vessels connected or joined in series.

14. Use according to Claims 8 to 13, **characterized in that** the hydrogen used to prepare hydrogen sulphide comprises further substances.

15. Use according to Claims 8 to 14, **characterized in that** the sulphur used to prepare hydrogen sulphide comprises further substances.

16. Use according to Claims 8 to 15, **characterized in that** the hydrogen used to prepare hydrogen sulphide comprises further substances, and the reaction mixture leaving the hydrogen sulphide synthesis comprises by-products or starting materials in addition to hydrogen sulphide.

## Revendications

1. Récipient de réaction pour la fabrication de sulfure d'hydrogène par réaction entre du soufre et de l'hydrogène, **caractérisé en ce que** le récipient de réaction et éventuellement des conduites de raccordement, ainsi que des armatures et des dispositifs de mesure et de régulation sont constitués en partie ou en totalité d'un matériau résistant au mélange réactionnel, qui contient de l'aluminium, **caractérisé en ce que** ce matériau est choisi dans le groupe suivant de matériaux : i) un matériau de numéro de matériau 2.4851 ayant la composition chimique < 0,1 % C, < 0,5 % Si, < 1,0 % Mn, < 0,02 % P, < 0,015 % S, 21,0 à 25,0 % Cr, < 0,5 % Cu, < 18, 0 % Fe, 1, 0 à 1,7 % Al, < 1, 0 % Co, < 0,5 % Ti, 0,05 à 0,12 % Y, ainsi que 58,0 à 63,0 % Ni, ii) un matériau de numéro de matériau 2.4633 ayant la composition chimique ayant la composition chimique 0,15 à 0,25 % C, < 0,5 % Si, < 0, 50 % Mn, < 0,02 % P, < 0,01 % S, 24, 0 à 26,0 % Cr, < 0,1 % Cu, 8,0 à 11,0 % Fe, 1,8 à 2,4 % Al, < 0,3 % Co, 0,1 à 0,2 % Ti, 0,05 à 0, 12 % Y, ainsi que 41,0 à 66,0 % Ni, iii) un matériau de numéro de matériau 3.3535 ayant la composition chimique ayant la composition chimique < 0,4 % Si, < 0,50 % Mn, < 0,3 % Cr, < 0,1 % Cu, < 0,4 % Fe, 96,0 à 97,5 % Al, < 0,15 % Ti, < 0,2 % Zn, ainsi que 2,6 à 3,6 % Mg ou iv) un matériau de numéro de matériau 1.4571 ayant la composition chimique ayant la composition chimique < 0,08 % C, < 1,0 % Si, < 2,0 % Mn, < 0,045 % P, < 0,015 % S, 16,5 à 18,5 % Cr, 2,0 à 2,5 % Mo, < 0, 7 % Ti, le reste étant Fe, ainsi que 10,5 à 13,5 % Ni, ce matériau étant revêtu sur la surface de contact avec de l'oxyde d'aluminium ou de l'aluminium.

2. Récipient de réaction selon la revendication 1, **caractérisé en ce que** la couche a été appliquée par pulvérisation à la flamme.

3. Récipient de réaction selon la revendication 1 ou 2, **caractérisé en ce que** l'épaisseur de la couche est de 0,05 à 1,0 mm.

4. Récipient de réaction selon les revendications 1 à 3, **caractérisé en ce que** le matériau est enrichi dans la zone proche de la surface avec de l'oxyde d'aluminium ou de l'aluminium en comparaison du matériau initial.

5. Récipient de réaction selon la revendication 4, **caractérisé en ce que** l'enrichissement a lieu par diffusion de solides à des températures élevées.

6. Récipient de réaction selon la revendication 5, **caractérisé en ce que** l'épaisseur de la zone enrichie avec de l'aluminium est de 0,05 à 1,0 mm.

7. Récipient de réaction selon les revendications 1 à 6, **caractérisé en ce que** le matériau est prétraité par décapage ou pré-oxydation.

8. Utilisation du récipient de réaction selon les revendications 1 à 7 pour la fabrication de sulfure d'hydrogène, **caractérisé en ce que** la pression dans le récipient de réaction est de > 0 bar à 50 bar.

9. Utilisation selon la revendication 8, **caractérisée en ce que** la pression dans le récipient de réaction est de > 9 bar à 20 bar.

10. Utilisation selon la revendication 8 ou 9, **caractérisée en ce que** la synthèse de sulfure d'hydrogène a lieu à une température comprise entre 300 °C et 600 °C.

11. Utilisation selon les revendications 8 à 10, **caractérisée en ce que** la synthèse de sulfure d'hydrogène a lieu en présence d'un catalyseur hétérogène.

12. Utilisation selon la revendication 11, **caractérisée en ce que** la synthèse de sulfure d'hydrogène a lieu en présence d'un catalyseur hétérogène supporté, qui contient un ou plusieurs éléments actifs choisis dans le groupe constitué par le molybdène, le nickel, le tungstène, le vanadium, le cobalt, le soufre, le sélénium, le phosphore, l'arsenic, l'antimoine, le bismuth, le silicium, l'aluminium, le titane et le zirconium.

13. Utilisation selon les revendications 8 à 12, **caractérisée en ce que** le sulfure d'hydrogène est fabriqué dans deux récipients de réaction ou plus connectés ou reliés en série.

14. Utilisation selon les revendications 8 à 13, **caractérisée en ce que** l'hydrogène utilisé pour la fabrication de sulfure d'hydrogène contient des substances supplémentaires.

15. Utilisation selon les revendications 8 à 14, **caractérisée en ce que** le soufre utilisé pour la fabrication de sulfure d'hydrogène contient des substances supplémentaires.

16. Utilisation selon les revendications 8 à 15, **caractérisée en ce que** l'hydrogène utilisé pour la fabrication de sulfure d'hydrogène contient des substances supplémentaires et le mélange réactionnel issu de la synthèse de sulfure d'hydrogène contient des produits secondaires ou des matières premières en plus du sulfure d'hydrogène.
